(19) Europäisches Patentamt
European Patent Office
Office européen des brevets

(11) **EP 4 730 099 A1**

(12) **EUROPEAN PATENT APPLICATION**
published in accordance with Art. 153(4) EPC

(43) Date of publication:
**22.04.2026 Bulletin 2026/17**

(21) Application number: **24822630.0**

(22) Date of filing: **06.06.2024**

(51) International Patent Classification (IPC):
**G06F 3/14** (2006.01)

(52) Cooperative Patent Classification (CPC):
**G06F 3/14**

(86) International application number:
**PCT/CN2024/097755**

(87) International publication number:
**WO 2024/255679 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.06.2023 CN 202310701638**

(71) Applicants:
• **QINGDAO HAIER LAUNDRY ELECTRIC
APPLIANCES CO., LTD**
**Qingdao, Shandong 266101 (CN)**
• **HAIER SMART HOME CO., LTD.**
**Qingdao, Shandong 266101 (CN)**

(72) Inventors:
• **FENG, Hailei**
**Qingdao, Shandong 266101 (CN)**
• **GAO, Qiuying**
**Qingdao, Shandong 266101 (CN)**
• **QI, Chunsheng**
**Qingdao, Shandong 266101 (CN)**
• **CAI, Zhi**
**Qingdao, Shandong 266101 (CN)**

(74) Representative: **Patentanwälte Olbricht Buchhold
Keulertz
Partnerschaft mbB
Neue Mainzer Straße 75
60311 Frankfurt am Main (DE)**

(54) **INTERFACE DISPLAY METHOD AND APPARATUS FOR HOUSEHOLD APPLIANCE, AND ELECTRONIC DEVICE AND STORAGE MEDIUM**

(57) The present invention relates to the technical field of household appliance control. Specifically provided are an interface display method and apparatus for a household appliance, and an electronic device and a storage medium, which aim to solve the technical problem of the low control efficiency of existing household appliances. For this purpose, the interface display method for a household appliance of the present invention comprises: receiving display information sent by at least one slave device; determining a display priority of the at least one slave device on the basis of the display information; and on the basis of the display priority, performing partitioned displaying on a control interface of a master device and a control interface of the at least one slave device in a preset display mode. In this way, remote control over a slave device is realized, the efficiency of controlling a household appliance is improved, and the usage experience of a user is improved.

Receive display information sent from at least one slave appliance — S100

Determine a display priority of the at least one slave appliance based on the display information — S200

Perform partitioned display on a control interface of the master appliance and a control interface of the at least one slave appliance according to a preset display mode based on the display priority — S300

**FIG. 1**

## Description

## CROSS-REFERENCE TO RELATED APPLICATION

The present application claims priority from Chinese patent application No. CN202310701638.7, entitled "INTERFACE DISPLAY METHOD AND APPARATUS FOR HOUSEHOLD APPLIANCE, AND ELECTRONIC DEVICE AND STORAGE MEDIUM" and filed on June 13, 2023, the entire disclosure of which is incorporated herein by reference.

## TECHNICAL FIELD

The present disclosure relates to the technical field of household appliance control, and specifically provides an interface display method and apparatus for a household appliance, an electronic device, and a storage medium.

## TECHNICAL BACKGROUND

At present, household appliances such as air conditioners, refrigerators, and washing machines have become essential household appliances for users. The traditional methods of controlling household appliances all require specialized control of specific appliances, regardless of which method the user chooses. For example, controlling a washing machine requires the control of a washing machine panel, and controlling an air conditioner requires the control of an air conditioner panel or the use of a remote control. This method cannot achieve intercommunication and interconnection among different household appliances, resulting in low control efficiency of household appliances and poor user experience in use.

Accordingly, there is a need in the art for a new solution to solve the above problem.

## SUMMARY

In order to overcome the above defects, the present disclosure is proposed, with the purpose of solving or at least partially solving the above technical problems. The present disclosure provides an interface display method and apparatus for a household appliance, an electronic device, and a storage medium.

In a first aspect, the present disclosure provides an interface display method for a household appliance, which is applied to a master appliance and which includes: receiving display information sent from at least one slave appliance; determining a display priority of the at least one slave appliance based on the display information; and performing partitioned display on a control interface of the master appliance and a control interface of the at least one slave appliance according to a preset display mode based on the display priority.

In an embodiment, the determining a display priority of the at least one slave appliance based on the display information includes: determining an information type of the display information; obtaining a preset weight corresponding to the information type; and determining the display priority of the at least one slave appliance based on the information type and the preset weight.

In an embodiment, the determining the display priority of the at least one slave appliance based on the information type and the preset weight includes: determining the display priority of the at least one slave appliance based on the product of the information type and the preset weight.

In an embodiment, the performing partitioned display on a control interface of the master appliance and a control interface of the at least one slave appliance according to a preset display mode based on the display priority includes: ranking the display priorities of all the slave appliances to obtain the highest display priority; and performing partitioned display on the control interface of the master appliance and the control interface of the slave appliance corresponding to the highest display priority according to the preset display mode.

In an embodiment, before the receiving display information sent from at least one slave appliance, the method further includes: judging whether the distance between the user and a first household appliance is smaller than a preset threshold; and if yes, taking the first household appliance as the master appliance and at least one of the remaining household appliances as the slave appliance.

In an embodiment, the method further includes: obtaining user operation instructions from a partitioned display area of the master appliance, where the partitioned display area is an area where the control interface of the slave appliance is located; and remotely controlling the slave appliance based on the user operation instructions.

In an embodiment, the method further includes: judging whether a touch sliding operation of the user is detected; and if yes, achieving interface switching between the control interface of the master appliance and the control interface of the at least one slave appliance based on the touch sliding operation of the user.

In a second aspect, the present disclosure provides an interface display apparatus for a household appliance, which includes:

a receiving module, which is configured to receive display information sent from at least one slave appliance;

a determination module, which is configured to determine a display priority of the at least one slave appliance based on the display information; and

a display module, which is configured to perform partitioned display on a control interface of the master appliance and a control interface of the at least one slave appliance according to a preset display mode based on the display priority.

In a third aspect, an electronic device is provided, which includes at least one processor and at least one storage device, where the storage device is adapted to store multiple program codes, and the program codes are adapted to be loaded and run by the processor to execute the interface display method for a household appliance according to any one of the above items.

In a fourth aspect, a computer-readable storage medium is provided, on which multiple program codes are stored, and the program codes are adapted to be loaded and run by a processor to execute the interface display method for a household appliance according to any one of the above items.

The above one or more technical solutions of the present disclosure at least have the following one or more advantageous effects.

The interface display method for a household appliance in the present disclosure includes: receiving display information sent from at least one slave appliance; determining a display priority of the at least one slave appliance based on the display information; and performing partitioned display on a control interface of the master appliance and a control interface of the at least one slave appliance according to a preset display mode based on the display priority. In this way, the display of the control interface of the slave appliance on the display screen of the master appliance is achieved. Based on this control interface, users can further remotely control the slave appliance, which improves the control efficiency of the household appliance and enhances the user experience in use.

## BRIEF DESCRIPTION OF DRAWINGS

With reference to the accompanying drawings, the content of the present disclosure will become easier to understand. It can be easily understood by those skilled in the art that these drawings are only for illustrative purpose, and are not intended to limit the scope of protection of the present disclosure. In addition, similar numbers in the drawings are used to denote similar components, in which:

FIG. 1 is a schematic flowchart of main steps of the interface display method for a household appliance according to an embodiment of the present disclosure;

FIG. 2 is a schematic flowchart of determining a display priority of at least one slave appliance based on display information in an embodiment;

FIG. 3 is a schematic flowchart of performing partitioned display on a control interface of the master appliance and a control interface of the at least one slave appliance according to a preset display mode based on the display priority in an embodiment;

FIG. 4 is a schematic diagram of performing partitioned display on the display interface of the master appliance in an embodiment;

FIG. 5 is a complete schematic flowchart of the interface display method for a household appliance in an embodiment;

FIG. 6 is a schematic diagram of the main structure of the interface display apparatus for a household appliance in an embodiment; and

FIG. 7 is a schematic diagram of the structure of the electronic device in an embodiment.

## DETAILED DESCRIPTION

Hereinafter, some embodiments of the present disclosure will be described with reference to the accompanying drawings. It should be understood by those skilled in the art that these embodiments are only used to explain the technical principles of the present disclosure, and are not intended to limit the scope of protection of the present disclosure.

In the description of the present disclosure, "module" and "processor" may include hardware, software, or a combination of both hardware and software. A module can include hardware circuits, various suitable sensors, communication ports, memories, as well as software components such as program codes, or a combination of software and hardware. The processor can be a central processing unit, a microprocessor, an image processor, a digital signal processor, or any other suitable processor. The processor has data and/or signal processing functions. The processor can be implemented in software, hardware, or a combination of both software and hardware. Non temporary computer-readable storage media include any suitable medium that can store program codes, such as magnetic disks, hard drives, optical disks, flash memories, read-only memories, random access memories, and the like. The term "A and/or B" refers to all possible combinations of A and B, such as only A, only B, or both A and B. The term "at least one A or B" or "at least one of A and B" has a similar meaning to "A and/or B", and can include only A, only B, or both A and B. The singular form of the term "one" or "this" can also include the plural form.

At present, the traditional methods of controlling household appliances all require specialized control of specific appliances, regardless of which method the user chooses. For example, controlling a washing machine requires the control of a washing machine panel, and controlling an air conditioner requires the control of an air conditioner panel or the use of a remote control. This method cannot achieve intercommunication and interconnection among different household appliances, resulting in low control efficiency of household appliances and poor user experience in use.

Therefore, the present application provides an interface display method and apparatus for a household appliance, an electronic device, and a storage medium, including: receiving display information sent from at least one slave appliance; determining a display priority of the at least one slave appliance based on the display information; and performing partitioned display on a control interface of the master appliance and a control interface of the at least one slave appliance according to a preset display mode based on the display priority. In this way, the display of the control interface of the slave appliance on the display screen of the master appliance is achieved. Based on this control interface, users can further remotely control the slave appliance, which improves the control efficiency of the household appliance and enhances the user experience in use.

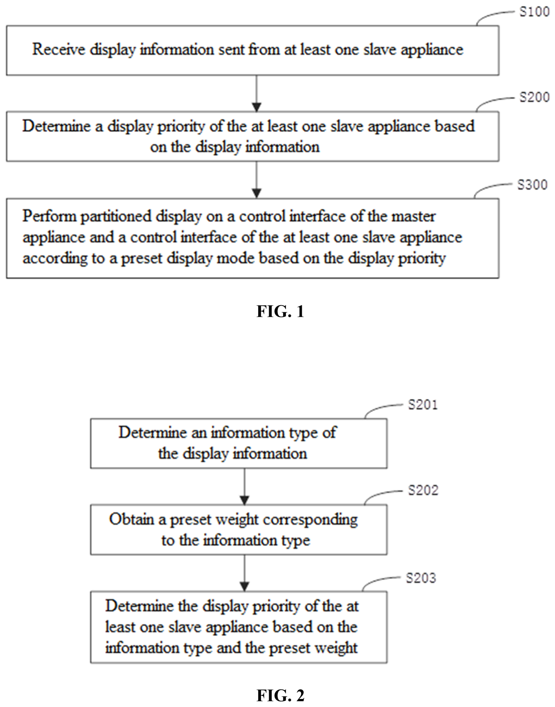

Reference is made to FIG. 1, which is a schematic flowchart of main steps of the interface display method for a household appliance according to an embodiment of the present disclosure.

As shown in FIG. 1, the interface display method for a household appliance in the embodiment of the present disclosure mainly includes the following steps S100-S300.

Step S100: receiving display information sent from at least one slave appliance.

Step S200: determining a display priority of the at least one slave appliance based on the display information.

Step S300: performing partitioned display on a control interface of the master appliance and a control interface of the at least one slave appliance according to a preset display mode based on the display priority.

The above steps S100-S300 include: receiving display information sent from at least one slave appliance; determining a display priority of the at least one slave appliance based on the display information; and performing partitioned display on a control interface of the master appliance and a control interface of the at least one slave appliance according to a preset display mode based on the display priority. In this way, the display of the control interface of the slave appliance on the display screen of the master appliance is achieved. Based on this control interface, users can further remotely control the slave appliance, which improves the control efficiency of the household appliance and enhances the user experience in use.

In a specific embodiment, before the receiving display information sent from at least one slave appliance, the method further includes: judging whether the distance between the user and a first household appliance is smaller than a preset threshold; and if yes, taking the first household appliance as the master appliance and at least one of the remaining household appliances as the slave appliance.

The first household appliance is a household appliance provided with a display screen.

Specifically, each household appliance in the user's home that is provided with a display screen is subject to intelligent monitoring. For example, a sensor arranged on the household appliance with a display screen is used to judge whether there is a user approaching the household appliance; if yes, this household appliance will be taken as the master appliance, and the remaining household appliances will be taken as the slave appliances. There is no restriction on whether the remaining household appliances are provided with display screens.

For example, a refrigerator with a display screen can serve as an example of the master appliance, while a washing machine, an oven and the like can serve as examples of the slave appliances, but the present disclosure is not limited to these examples.

Hereinafter, the above steps S100 to S300 will be further described respectively.

Regarding the above step S100, both the master appliance and the slave appliances are household appliances with communication components such as Bluetooth, WIFI, NFC, ZIGBEE, etc. Through communication protocols, communication between the master appliance and the slave appliances can be achieved. For example, the master appliance and the slave appliances can send display information to each other, and the master appliance further receives the display information sent from the slave appliances.

The above is a further explanation of step S100; next, step S200 will be further described below.

Specifically, as shown in FIG. 2, the above step S200 can be implemented through the following steps S201 to S203.

Step S201: determining an information type of the display information.

Specifically, the information types of the display information may typically include alarm type, control type, and prompt type. In addition, the information type corresponding to the display information of each slave appliance can also be determined according to the actual situation. For example, the information types of the display information of the washing machine may also include safety type and marketing type, etc.

Step S202: obtaining a preset weight corresponding to the information type.

Specifically, a database in the household appliance stores a preset weight corresponding to each information type. After the information type corresponding to the display information is determined, the corresponding preset weight can be further obtained from the database based on the information type.

Step S203: determining the display priority of the at least one slave appliance based on the information type and the preset weight.

In a specific embodiment, the determining the display priority of the at least one slave appliance based on the information type and the preset weight includes: determining the display priority of the at least one slave appliance based on the product of the information type and the preset weight.

The display priority refers to the priority of displaying the control areas of the slave appliances on the master appliance.

Specifically, the product of the information type of each kind of display information and its corresponding preset weight can be used as the display priority of the corresponding slave appliance.

In another embodiment, the display priority of the display information pushed by the slave appliances can also be directly agreed upon in the communication protocol, and the master appliance can directly read the display priority of the corresponding slave appliance, thereby omitting the calculation step.

The above is a further explanation of step S200; next, step S300 will be further described below.

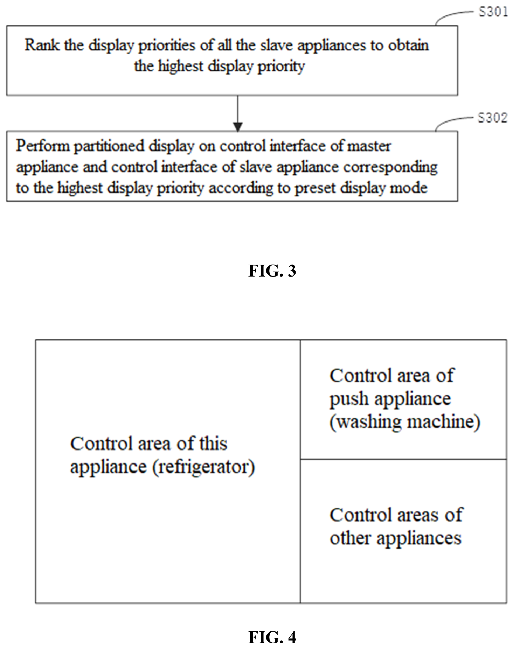

Specifically, as shown in FIG. 3, the above step S300 can be implemented through the following steps S301 to S302.

Step S301: ranking the display priorities of all the slave appliances to obtain the highest display priority.

Specifically, when there are multiple slave appliances, the display priorities of all the slave appliances are first ranked to obtain the highest display priority.

Step S302: performing partitioned display on the control interface of the master appliance and the control interface of the slave appliance corresponding to the highest display priority according to the preset display mode.

The preset display mode can be a display mode set in advance; for example, the display screen of the master appliance is divided into two areas, i.e., a left area and a right area, where the left area displays the control interface of the master appliance, and the right area displays the control interface of the slave appliance corresponding to the highest display priority. In this way, the usage range of the display screen of the master appliance is expanded, making it convenient for users to remotely control the slave appliances and enhancing the user experience in use.

For example, when the master appliance receives multiple kinds of display information sent from multiple slave appliances, the display priority of each slave appliance can be specifically calculated using the following formula:

$$s = \sum_{i=1}^{k} x_i \times n;$$

where s represents the display priority of each slave appliance, k represents the total number of information types of the display information sent from each slave appliance, x represents the preset weight corresponding to the information type, and n represents the quantity of a certain type of information.

In an embodiment, score is used as an example of the preset weight to provide a detailed explanation on determining the display priority of at least one slave appliance based on the information type and the preset weight. For example, when the user is cooking in the kitchen, the display screen of the refrigerator receives the following information at this time.

There are three types of display information for the oven, namely alarm type, control type, and prompt type. Each type corresponds to a score (weight) of 5 points, 3 points and 2 points, respectively. At a certain moment, if the oven generates the following information: 2 pieces of alarm information, 1 piece of control information, and 1 piece of prompt information, then the display priority of the oven is S=2*5+1*3+1*2=15 points.

There are five types of information for the washing machine, namely safety type, alarm type, control type, prompt type, and marketing type, with the score (weight) being 10 points, 5 points, 3 points, 2 points and 1 point, respectively. At a certain moment, if the following display information is generated: 1 piece of safety information (such as electricity leakage of machine), 1 piece of alarm information, 1 piece of waiting for user control information, and 2 pieces of marketing information, then the display priority of the washing machine is S=10+5+3+2=20 points.

The master appliance (refrigerator) compares the display priorities of the oven and the washing machine, and finds that the washing machine has the highest display priority. Then, the screen will be preferentially switched to a multi-appliance control interface, and the control interface of this appliance and the control interface of the washing machine will be displayed in different areas for users to control.

In addition to the preset display mode mentioned above, as shown in FIG. 4, the control interface of the master appliance, the display interface of the slave appliance corresponding to the highest display priority, and the control interfaces of other appliances can also be displayed. The control interface of the master appliance (the control area of this appliance) directly controls the master appliance, the control interface of the slave appliance (the control area of the push appliance) enables remote control of the slave appliance corresponding to the highest display priority, and the control areas of other appliances further enable remote control of other household appliances, making it convenient for users to remotely control the slave appliances and improving the user experience in use.

In a specific embodiment, the method further includes: obtaining user operation instructions from a partitioned display area of the master appliance, where the partitioned display area is an area where the control interface of the slave appliance is located; and remotely controlling the slave appliance based on the user operation instructions.

Specifically, as shown in FIG. 4, the control interface of the slave appliance (the control area of the push appliance) allows users to perform push button operation or touch screen operation in this area so that user operation instructions can be obtained from the control interface of the slave appliance (the control area of the push appliance), enabling remote control of the slave appliance corresponding to the highest display priority. This facilitates user's remote control of the slave appliance and improves the user experience in use.

In an embodiment, the method further includes: judging whether a touch sliding operation of the user is detected; and if yes, achieving interface switching between the control interface of the master appliance and the control interface of the at least one slave appliance based on the touch sliding operation of the user.

Specifically, it is also possible to detect in real time on the master appliance whether there is a touch sliding operation of the user, including but not limited to swiping up on the bottom of the display screen of the master appliance, three finger tapping, or double finger sliding, etc. When it is detected that the user has triggered the sliding operation, the corresponding switching of the operation interface is achieved.

For example, the master appliance currently only displays the control interface of the master appliance, and does not receive the display information sent from any slave appliance. However, it has detected the user's touch sliding operation of swiping up on the bottom of the display screen of the master appliance. Based on the user's touch sliding operation, the current control interface of the master appliance is switched to the control interface of the slave appliance, thus achieving a quick switch from the master appliance to the control interface of the slave appliance.

It should be pointed out that although the various steps have been described in a specific order in the above embodiments, it should be understood by those skilled in the art that in order to achieve the effects of the present disclosure, different steps do not necessarily have to be executed in this order. They can be executed simultaneously (in parallel) or in other orders, and these changes are all within the scope of protection of the present disclosure.

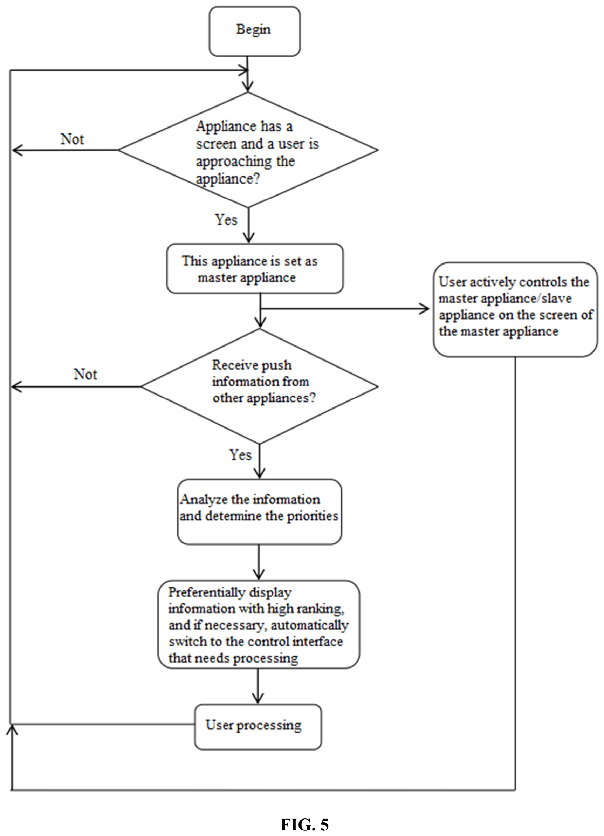

FIG. 5 is a complete schematic flowchart of the interface display method for a household appliance. First, the master appliance is determined, and then it is judged whether the master appliance has received push information (display information) from other appliances. If yes, the push information is analyzed to obtain the display priorities of the slave appliances, and then the display information with the highest priority is displayed. The control interface of the master appliance and the control interface of the slave appliance corresponding to the highest display priority are displayed in different areas, making it convenient for users to remotely control the slave appliances and improving the user experience in use.

Through the interface display method of the present application, the following scenarios can be specifically implemented.

The washing machine in a certain user's home has a large screen. At this time, the user is washing the clothing on the balcony and suddenly remembers that he/she should turn on the rice cooker in the kitchen to cook. At this time, the multi-appliance control function of the washing machine screen can be turned on to further remotely control the cooking function of the rice cooker.

Another user is cooking in the kitchen; at this time, a pop-up window on the refrigerator screen reminds that the dryer has finished drying and prompts whether aromatherapy treatment is needed. The user chooses not to perform aromatherapy treatment, further controls the dryer door to open, and controls the electric clothing hanger to roll down for hanging the clothing.

Further, the present disclosure also provides an interface display apparatus for a household appliance.

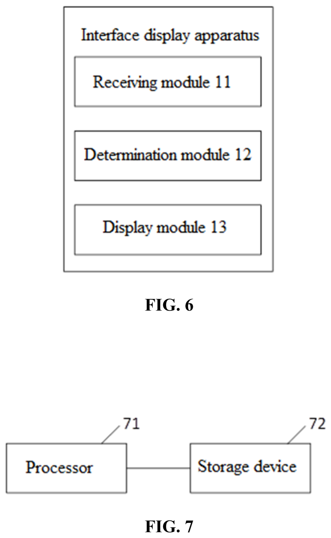

Reference is made to FIG. 6, which is a block diagram of the main structure of the interface display apparatus for a household appliance according to an embodiment of the present disclosure.

As shown in FIG. 6, the interface display apparatus for a household appliance in the embodiment of the present disclosure mainly includes a receiving module 11, a determination module 12, and a display module 13. In some embodiments, one or more of the receiving module 11, the determination module 12 and the display module 13 may be combined together to form one module.

In some embodiments, the receiving module 11 may be configured to receive display information sent from at least one slave appliance.

The determination module 12 may be configured to determine a display priority of the at least one slave appliance based on the display information.

The display module 13 may be configured to perform partitioned display on a control interface of the master appliance and a control interface of the at least one slave appliance according to a preset display mode based on the display priority.

In an embodiment, for the specific description of function implementation, reference may be made to the description of steps S100-S300.

The above interface display apparatus for a household appliance is used to implement the embodiment of the interface display method for a household appliance shown in FIG. 1. The technical principles, technical problems solved, and generated technical effects of the two are similar. It can be clearly understood by those skilled in the art that for the convenience and simplicity of description, regarding the specific working process and related description of the interface display apparatus for a household appliance, reference may be made to the content described in the embodiment of the interface display method for a household appliance, and a repeated description will be omitted herein.

It can be understood by those skilled in the art that the implementation of all or part of the process in the method of one of the above embodiments in the present disclosure can also be completed by instructing relevant hardware through a computer program. The computer program can be stored in a computer-readable storage medium, and when executed by a processor, the computer program can implement the steps of the above method embodiments. The computer program includes computer program codes, which can be in the form of source codes, object codes, executable files, or some intermediate forms. The computer-readable storage medium may include any entity or device capable of carrying the computer program codes, medium, USB flash drive, portable hard disk, magnetic disk, optical disk, computer memory, read-only memory, random access memory, electric carrier signal, telecommunication signal, and software distribution medium, etc. It should be noted that the content contained in the computer-readable storage medium can be appropriately added or deleted according to the requirements of legislation and patent practice within the jurisdiction. For example, in some jurisdictions, according to legislation and patent practice, the computer-readable storage medium does not include electric carrier signals and telecommunications signals.

Further, the present disclosure also provides an electronic device. In an embodiment of the electronic device according to the present disclosure, as shown in FIG. 7, the electronic device includes at least one processor 71 and at least one storage device 72. The storage device 72 may be configured to store a program for executing the interface display method for a household appliance of the method embodiment described above, and the processor 71 may be configured to execute the program in the storage device 72, including but not limited to a program for executing the interface display method for a household appliance of the method embodiment described above. For ease of explanation, only the parts related to the embodiments of the present disclosure are shown. For specific technical details not disclosed, reference may be made to the parts of the method of the embodiment of the present disclosure.

In the embodiment of the present disclosure, the electronic device may be a control device including various devices. In some possible implementations, the electronic device may include multiple storage devices and multiple processors. The program for executing the interface display method for a household appliance of the above method embodiment can be divided into multiple subprograms, each of which can be loaded and run by the processor respectively to execute different steps of the interface display method for a household appliance of the above method embodiment. Specifically, each subprogram can be stored in different storage devices respectively, and each processor can be configured to execute programs in one or more storage devices to jointly implement the interface display method for a household appliance of the above method embodiment. That is, each processor executes different steps of the interface display method for a household appliance of the above method embodiment respectively to jointly implement the interface display method for a household appliance of the above method embodiment.

The above-mentioned multiple processors can be processors deployed on the same device; for example, the above-mentioned electronic device can be a high-performance device composed of multiple processors, and the above-mentioned multiple processors can be processors deployed on the high-performance device. In addition, the above-mentioned multiple processors can also be processors deployed on different devices; for example, the above-mentioned electronic device can be a server cluster, and the above-mentioned multiple processors can be processors on different servers in the server cluster.

Further, the present disclosure also provides a computer-readable storage medium. In an embodiment of the computer-readable storage medium according to the present disclosure, the computer-readable storage medium may be configured to store a program for executing the interface display method for a household appliance of the method embodiment described above, and the program can be loaded and run by a processor to implement the interface display method for a household appliance described above. For ease of explanation, only the parts related to the embodiments of the present disclosure are shown. For specific technical details not disclosed, reference may be made to the parts of the method of the embodiment of the present disclosure. The computer-readable storage medium may be a storage device including various electronic devices, and optionally, the computer-readable storage medium in the embodiment of the present disclosure is a non-temporary computer-readable storage medium.

Further, it should be understood that since the settings of various modules are only for illustrating the functional units of the device of the present disclosure, the physical device corresponding to these modules can be the processor itself, or a part of the software, a part of the hardware, or a part of the combination of software and hardware in the processor. Therefore, the number of various modules in the figure is only illustrative.

It can be understood by those skilled in the art that the various modules in the device can be adaptively split or merged. The splitting or merging of specific modules will not cause the technical solutions to deviate from the principles of the present disclosure; therefore, the technical solutions after splitting or merging will all fall within the scope of protection of the present disclosure.

Hitherto, the technical solutions of the present disclosure have been described in connection with the preferred embodiments shown in the accompanying drawings, but it is easily understood by those skilled in the art that the scope of protection of the present disclosure is obviously not limited to these specific embodiments. Without departing from the principles of the present disclosure, those skilled in the art can make equivalent changes or replacements to relevant technical features, and all the technical solutions after these changes or replacements will fall within the scope of protection of the present disclosure.

**Claims**

1. An interface display method for a household appliance, which is applied to a master appliance, **characterized by** comprising:

   receiving display information sent from at least one slave appliance;
   determining a display priority of the at least one slave appliance based on the display information; and
   performing partitioned display on a control interface of the master appliance and a control interface of the at least one slave appliance according to a preset display mode based on the display priority.

2. The interface display method for a household appliance according to claim 1, wherein the determining a display priority of the at least one slave appliance based on the display information comprises:

   determining an information type of the display information;
   obtaining a preset weight corresponding to the information type; and
   determining the display priority of the at least one slave appliance based on the information type and the preset weight.

3. The interface display method for a household appliance according to claim 2, wherein the determining the display priority of the at least one slave appliance based on the information type and the preset weight comprises: determining the display priority of the at least one slave appliance based on the product of the information type and the preset weight.

4. The interface display method for a household appliance according to claim 1, wherein the performing partitioned display on a control interface of the master appliance and a control interface of the at least one slave appliance according to a preset display mode based on the display priority comprises:

   ranking the display priorities of all the slave appliances to obtain the highest display priority; and
   performing partitioned display on the control interface of the master appliance and the control interface of the slave appliance corresponding to the highest display priority according to the preset display mode.

5. The interface display method for a household appliance according to claim 1, wherein before the receiving display information sent from at least one slave appliance, the method further comprises:

   judging whether the distance between the user and a first household appliance is smaller than a preset threshold; and
   if yes, taking the first household appliance as the master appliance and at least one of the remaining household appliances as the slave appliance.

6. The interface display method for a household appliance according to claim 1, further comprising:

   obtaining user operation instructions from a partitioned display area of the master appliance, wherein the partitioned display area is an area where the control interface of the slave appliance is located; and
   remotely controlling the slave appliance based on the user operation instructions.

7. The interface display method for a household appliance according to claim 1, further comprising:

   judging whether a touch sliding operation of the user is detected;
   and if yes, achieving interface switching between the control interface of the master appliance and the control interface of the at least one slave appliance based on the touch sliding operation of the user.

8. An interface display apparatus for a household appliance, **characterized by** comprising:

   a receiving module, which is configured to receive display information sent from at least one slave appliance;
   a determination module, which is configured to determine a display priority of the at least one slave appliance based on the display information; and
   a display module, which is configured to perform partitioned display on a control interface of the master appliance and a control interface of the at least one slave appliance according to a preset display mode based on the display priority.

9. An electronic device, comprising at least one processor, and at least one storage device adapted to store multiple program codes, **characterized in that** the program codes are adapted to be loaded and run by the processor to execute the interface display method for a household appliance according to any one of claims 1 to 7.

10. A computer-readable storage medium, on which multiple program codes are stored, **characterized in that** the program codes are adapted to be loaded and run by a processor to execute the interface display method for a household appliance according to any one of claims 1 to 7.

S100

Receive display information sent from at least one slave appliance

S200

Determine a display priority of the at least one slave appliance based on the display information

S300

Perform partitioned display on a control interface of the master appliance and a control interface of the at least one slave appliance according to a preset display mode based on the display priority

**FIG. 1**

S201

Determine an information type of the display information

S202

Obtain a preset weight corresponding to the information type

S203

Determine the display priority of the at least one slave appliance based on the information type and the preset weight

**FIG. 2**

S301

Rank the display priorities of all the slave appliances to obtain the highest display priority

S302

Perform partitioned display on control interface of master appliance and control interface of slave appliance corresponding to the highest display priority according to preset display mode

**FIG. 3**

| Control area of this appliance (refrigerator) | Control area of push appliance (washing machine) |
| | Control areas of other appliances |

**FIG. 4**

**FIG. 5**

Interface display apparatus

Receiving module 11

Determination module 12

Display module 13

**FIG. 6**

71 Processor — 72 Storage device

**FIG. 7**

## INTERNATIONAL SEARCH REPORT

| International application No. |
| --- |
| **PCT/CN2024/097755** |

### A. CLASSIFICATION OF SUBJECT MATTER

G06F3/14(2006.01)i

According to International Patent Classification (IPC) or to both national classification and IPC

### B. FIELDS SEARCHED

Minimum documentation searched (classification system followed by classification symbols)

IPC：G06F

Documentation searched other than minimum documentation to the extent that such documents are included in the fields searched

Electronic data base consulted during the international search (name of data base and, where practicable, search terms used)

CNTXT, ENTXTC, DWPI: 家电, 显示, 优先级, 界面, 分区, 信息, 权重, 阈值, 触摸, 切换, household appliance, display+, priority, interface, split, information, weight, threshold, touch, switch

### C. DOCUMENTS CONSIDERED TO BE RELEVANT

| Category* | Citation of document, with indication, where appropriate, of the relevant passages | Relevant to claim No. |
| --- | --- | --- |
| Y | CN 107566232 A (HEFEI MIDEA INTELLIGENT TECHNOLOGY CO., LTD.) 09 January 2018 (2018-01-09) <br> description, embodiments 1 and 4, and figures 1-10 | 1-10 |
| Y | CN 114450651 A (HISENSE VISUAL TECHNOLOGY CO., LTD. et al.) 06 May 2022 (2022-05-06) <br> description, specific embodiments, and figures 1-7 | 1-10 |
| A | CN 108319153 A (GUANGDONG MEDIA REFRIGERATION EQUIPMENT CO., LTD. et al.) 24 July 2018 (2018-07-24) <br> entire document | 1-10 |
| A | CN 109614176 A (NUBIA TECHNOLOGY CO., LTD.) 12 April 2019 (2019-04-12) <br> entire document | 1-10 |
| A | JP 2010041344 A (SHARP K.K.) 18 February 2010 (2010-02-18) <br> entire document | 1-10 |
| A | US 2020021456 A1 (GREE GREEN REFRIGERATION TECHNOLOGY CENTER CO., LTD. OF ZHUHAI) 16 January 2020 (2020-01-16) <br> entire document | 1-10 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 August 2024** | **22 August 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/097755**

| Patent document cited in search report | | | Publication date (day/month/year) | Patent family member(s) | | | Publication date (day/month/year) |
|---|---|---|---|---|---|---|---|
| CN | 107566232 | A | 09 January 2018 | None | | | |
| CN | 114450651 | A | 06 May 2022 | WO | 2022037032 | A1 | 24 February 2022 |
| | | | | JP | 2022034698 | A | 04 March 2022 |
| | | | | JP | 7332551 | B2 | 23 August 2023 |
| CN | 108319153 | A | 24 July 2018 | None | | | |
| CN | 109614176 | A | 12 April 2019 | CN | 109614176 | B | 15 October 2021 |
| JP | 2010041344 | A | 18 February 2010 | JP | 5081093 | B2 | 21 November 2012 |
| US | 2020021456 | A1 | 16 January 2020 | US | 10833887 | B2 | 10 November 2020 |
| | | | | WO | 2018072631 | A1 | 26 April 2018 |

Form PCT/ISA/210 (patent family annex) (July 2022)

**EP 4 730 099 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310701638